Europäisches Patentamt

**European Patent Office**

**Office européen des brevets**

(11) Publication number: **0 083 502**
A1

## EUROPEAN PATENT APPLICATION

(21) Application number: **82306959.6**

(22) Date of filing: **24.12.82**

(51) Int. Cl.³: **G 05 B 19/405**

(30) Priority: **30.12.81 JP 210771/81**

(43) Date of publication of application: **13.07.83**
**Bulletin 83/28**

(84) Designated Contracting States: **DE FR GB**

(71) Applicant: **Fanuc Ltd, 5-1, Asahigaoka, 3-chome, Hino-shi, Tokyo 191 (JP)**

(72) Inventor: **Inaba, Hajimu, 5-3-16, Asahigaoka, Hino-shi Tokyo (JP)**
Inventor: **Sakakibara, Shinsuke, Mezon-Izumi 101 1-23-3, Higashiizumi, Komae-shi Tokyo (JP)**
Inventor: **Hiraizumi, Mitsuo, 581-16, Kitano-machi, Hachioji-shi Tokyo (JP)**

(74) Representative: **Billington, Lawrence Emlyn et al, HASELTINE LAKE & CO Hazlitt House 28 Southampton Buildings Chancery Lane, London WC2A 1AT (GB)**

(54) **Robot control method and arrangement.**

(57) A robot control method, and a robot control arrangement which utilises the method, wherein a combination of plural robot service codes constituting a command data group is represented by a single code, referred to as a macro code. When the robot is to perform the same series of activities, the operator, in teaching the robot, need enter only the macro code in order to teach each activity in said series. Then, when the macro code is read out of a memory during actual operation, the code is converted into the group of command data and the robot executes the activities corresponding thereto. An embodiment of a robot control arrangement according to the invention is illustrated, the components thereof being labelled and the interconnections therebetween being shown.

ROBOT CONTROL METHOD

AND ARRANGEMENT

This invention relates to a robot control method and arrangement.

Robots equipped with a playback function are known in the art. With playback-type robots, the operator, making use of a teaching box, referred to also as a teaching pendant, teaches the robot various services or tasks in advance of actual operation. The taught data, referred to as robot command data hereinafter, are stored in a data memory located within a control unit. The robot is then placed in operation to service, say, a machine tool. Whenever a request for a service arrives from the machine tool side, a series of the aforementioned robot command data are read out of the data memory successively, and the robot responds by servicing the machine tool in repetitive fashion.

A typical item of robot command data comprises positional information relating to a point at which a service is to be performed, speed for movement up to the point, and service codes for indicating how the hand is to be controlled at the point and for governing the exchange of signals with the machine tool. In general, the teaching operation mentioned above proceeds in the following fashion: (1) set the data memory address at which the item of taught data is to be stored; (2) execute positioning by a so-called jog feed (manual feed); (3) set the positional information regarding the point and set the magnitude of the speed command for movement up to the point; and (4) set the robot service codes. A series of robot motions for servicing a machine tool is taught by repeating the sequence (1) through (4).

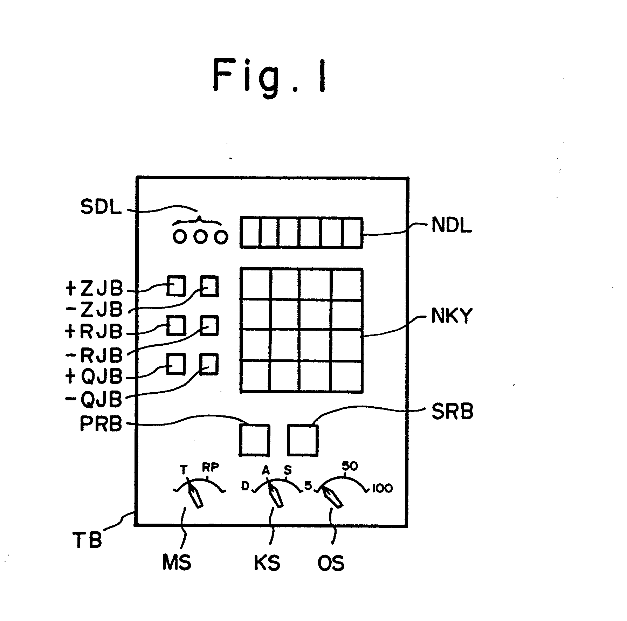

Fig. 1 shows the front panel of a teaching box typical of the prior art. The teaching box, indicated generally at TB, includes a mode selection switch MS for selecting from among such modes as a teach mode "T" and a repeat mode "RP", a selection switch KS for designating whether an input numerical value is data "D", an address "A" or a service code "S", an over-ride switch OS for over-riding the jog feed speed as well as the feed speed when the robot is running automatically, a jog button +ZJB for feeding the robot arm manually along the Z-axis in the positive direction, a jog button -ZJB for feeding the robot arm manually along the Z-axis in the negative direction, and, similarly, jog buttons +RJB, -RJB for feeding the robot arm manually along the R-axis in the positive and negative directions, respectively, and jog buttons +θJB, -θJB for feeding the robot arm manually along the θ-axis in the positive and negative directions, respectively. The teaching box TB further includes a position record button PRB for storing, in the data memory, such data as the present position of the robot currently registered in a present position register, a service code record button SRB for storing service codes in the data memory, numeric keys NKY for entering numerical values indicative of addresses and the like, a status display lamp SDL for presenting an indication of an alarm or the like, and numeric display lamps NDL for displaying a six-digit decimal number which indicates the taught sequence number, service code, address and the like. The teaching of an item of robot command data through use of the teaching box TB is carried out through a sequence whose general features will now be described.

First, after placing the system in the teach mode, the operator sets selection switch KS to the "A" position for address selection, after which the numeric keys NKY are operated to enter the address which designates the storage area of the data memory into which the item of taught data is to be written. The entered address is stored in the address register of a working memory located internally of the robot control device, and is displayed simultaneously by the first four (leftmost) digits of the numeric display lamps NDL. Next, the selection switch KS is set to the "D" position for data selection and the sequence number and operating speed are set. These values are likewise stored in, e.g., a speed register located in the working memory and are displayed by the numeric display lamps NDL. The robot arm is now jog-fed to the target position by appropriate manipulation of the jog buttons +ZJB, -ZJB, +RJB, -RJB, +θJB, -θJB. Manipulating these jog buttons causes a pulse distributor to produce pulses each of which updates, by +1 or -1 depending upon the direction of arm movement, the data stored in the present position register of the working memory. The content of the present position register will therefore always indicate the present position of the robot arm. Next, following the jog feed, the position record button PRB is depressed. This causes the target position, feed speed and sequence number, stored in, e.g., the present position and speed registers, to be stored in the area of the taught data memory designated by the address. This ends the teaching operation for movement of the robot arm.

Finally, the operator sets the selection switch KS to the "S" position for service code selection. The operator then enters, one at a time in the form of robot service codes, a series of operations to be performed by the robot hand and by the machine tool at the target point, and depresses the service code record button SRB to record the service codes. Thus, each service code is planted in the predetermined area of the data memory designated by the abovementioned address. This ends the teaching operation for one item of robot command data. If the foregoing operation is repeated, then a series of robot command data will be stored in the data memory. The entry of a full series of such data completes the teaching of all the necessary robot command data, the latter constituting a robot command program.

In the conventional robot teaching operation described above, there are instances where a plurality of robot processes are desired for execution at a given point. This necessitates the entry of robot service codes corresponding to each robot process to be performed. For example, to grip a workpiece using the robot hand, it is generally necessary to execute the following processes at the given point: (a) produce a signal in response to which the robot hand grips the workpiece; (b) execute timing to confirm that the workpiece has been gripped; and (c) check whether the robot hand is in the fully closed state. In the timing process (b), there is a period of waiting required for the workpiece to be gripped perfectly by the hand. In the fully closed state checking process (c), the detection of the fully closed state is interpreted as indicating that the hand has not been able to grip the workpiece, whereas detection of a state other than the fully closed state means that the workpiece has been gripped correctly and permits operation to advance to the next step.

In teaching the hand to grip a workpiece in the foregoing manner, the hand is moved to the point at which the workpiece is to be gripped, followed by the setting of a robot service code for the production of the signal in process (a), the setting of a robot service code for the timing process (b), and the setting of a robot service code of the fully closed checking process

(c), the operator performing each of these steps in sequential order.  The teaching of plural service codes
gripping operation, but also for loading a workpiece
in this manner is a requirement not only for a workpiece into the chuck of a lathe, for changing tools, and for many other operations.  Consequently, the teaching of a robot in the aforementioned fashion is a troublesome, complicated and time-consuming operation which invites operator error.

According to one aspect of the present invention there is provided a robot control method in which a robot is made to operate on the basis of robot command data prepared in advance, comprising the steps of:

creating robot command data by collecting into a command data group, represented by a single macro code, several items of command data selected from a multiplicity of various items of command data for activating a robot, and

storing a corresponding relationship between said macro code and said command data group in a memory of the robot,

wherein when said macro code is read from among said robot command data during operation of the robot, the command data group corresponding to said macro code is read out of said memory and said robot performs activities successively on the basis of the items of command data contained in said command data group.

According to another aspect of the present invention there is provided a robot control arrangement by means of which a robot can be made to operate on the basis of robot command data prepared in advance, the robot control arrangement being adapted and arranged to perform, when in use, a robot control method comprising the steps of:

creating robot command data by collecting into a command data group, represented by a single macro code, several items of command data selected from a multiplicity of various items of command data for activating a robot, and

storing a corresponding relationship between said macro code and said command data group in a memory of the robot,

wherein when said macro code is read from among said robot command data during operation of the robot, the command data group corresponding to said macro code is read out of said memory and said robot performs activities successively on the basis of the items of command data contained in said command data group.

Examples of the present invention may provide a robot control method and arrangement wherein, when a robot is to be taught robot command data, it is unnecessary to teach the same series of plural similar data items repetitively.

Examples of the present invention may provide a robot control method and arrangement wherein it is unnecessary to teach a robot service code for each operation in a series of operations to be performed by a robot at a given point.

Examples of the present invention may provide a robot control method and arrangement wherein positional data relating to positions on a robot operating path can be taught in a simple manner.

Examples of the present invention may provide a robot control method and arrangement wherein data for controlling a robot can be taught simply without inviting operator error.

The present invention may be applicable to a robot control method and arrangement by means of which a robot may be made to perform such activities as gripping workpieces arrayed on a pallet, loading workpieces onto a machine tool and changing tools provided on a machine tool. In general, to accomplish the foregoing, a robot is taught not only positional data relating to service points and data relating to the speed of movement up to said points, but also individual blocks of data composed of a combination of robot service codes for controlling the robot wrist and hand at various points on the operating path, for exchanging signals with the machine tool and for performing palletizing and other activities. Plural ones of these data blocks are inserted in the robot command data in accordance with the sequence of activities to be carried out by the robot. Then, in operation, the robot is made to execute the abovementioned activities on the basis of the robot command data. When the same series of activities is to be performed by the robot, even at different taught positions, the same combination of robot service codes is employed.

Examples of the present invention, based on the above point, provide a robot control method
and arrangement
wherein a combination of plural robot service codes is represented by a single code, referred to as a macro code. When the robot is to perform the same series of activities, the operator, in teaching the robot, need enter only the macro code in order to teach each activity in said series. Then, when the macro code is read out of a memory during actual operation, the robot executes the activities which correspond to the macro code.

Features and advantages of examples of the present invention will be apparent from the following description taken in conjunction with the accompanying drawings, in which:

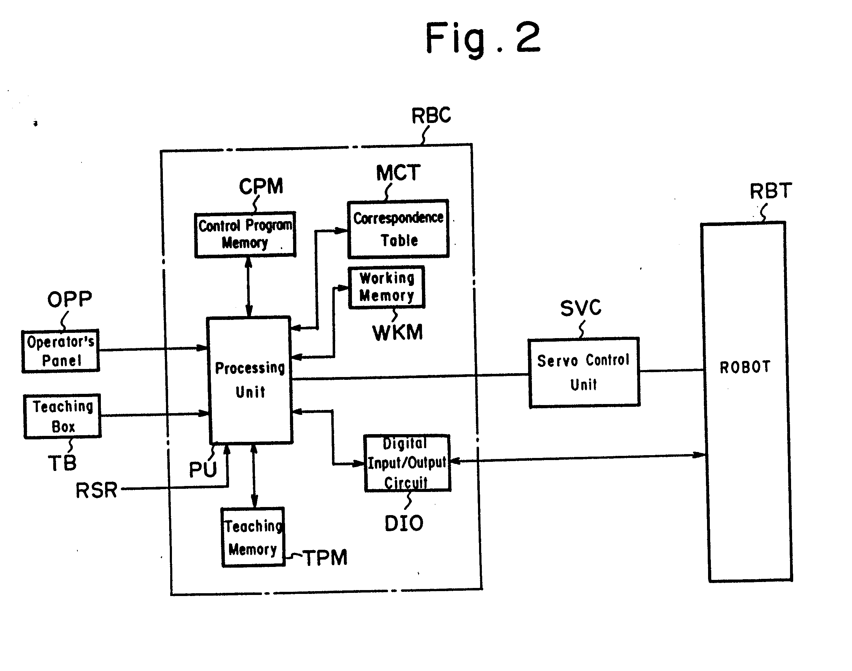

Fig. 1 is a plan view illustrating the front panel of a teaching box, and Fig. 2 is a block diagram of an arrangement for practicing a robot control method according to the present invention.

Referring to the block diagram of Fig. 2, which / includes a robot control arrangement for practicing a method of the invention, a robot controller RBC comprises a processing unit PU, a control program memory CPM, a teaching memory TPM for storing a taught robot command program as well as other items of data and parameters, a working memory WKM, a correspondence table MCT for storing the corresponding relationship between (a) each of a plurality of macro codes and (b) a plurality of robot service codes defined by each one of the macro codes, and a digital input/output circuit DIO for the input and output of digital signals with the robot, indicated at RBT. A teaching box TB and an operator's panel OPP are connected to the robot controller RBC. The operator's panel OPP includes a switch for turning a power supply (not shown) on and off, as well as an automatic/manual changeover switch. These switches are not shown. A servo control unit SVC having a pulse distributing circuit, an acceleration/deceleration circuit and a servo circuit, not shown, is connected between the robot controller and the robot RBT.
Although only one servo control unit is shown, such
units are provided for Z-, R and θ-axes. The robot RBT
includes motors for movement along each of the above
axes, as well as a variety of limits switches and
sensors.

In the operation of the arrangement shown in Fig.
2, the operator, using the teaching box or the
operator's panel, stores in the correspondence table
MCT a corresponding relationship between a macro and a
plurality of robot service codes represented by the
macro code. For example, assume that a macro code for
gripping a workpiece is composed of the symbol "S"
followed by a two-digit number, as given by S$\overline{XX}$, and
that a service code indicating a particular robot
function is made up of the symbol "S" followed by a
different two-digit number. Thus, by way of example,
S$\underline{OO}$ will represent a robot service code indicative of
processing for the generation of a signal instructing
the robot to grip a workpiece, S$\underline{\Delta\Delta}$ will represent a
robot service code for executing timing processing, and
S$\underline{\nabla\nabla}$ will represent a robot service code for executing
the check for the fully closed state. Also, let us
assume that the proper sequence for the workpiece
gripping process is signal generation, timing and the
fully-closed state check, in the order mentioned.
Under these conditions, therefore, the operator uses
the teaching box or operator's panel to enter the

following:

$$S\underline{XX}; \ S\underline{OO}; \ S\underline{\Delta\Delta}; \ S\underline{\nabla\nabla}$$

and stores the macro code S$\underline{XX}$, as well as the robot service codes S$\underline{OO}$, S$\underline{\Delta\Delta}$ and S$\underline{\nabla\nabla}$ corresponding thereto, in the correpondence table MCT. Thereafter, and in similar fashion, the operator sets other macro codes for other robot activities and the robot service codes corresponding to each macro code, and then stores the corresponding macro codes and service codes in the table. The robot service codes S$\underline{OO}$, S$\underline{\Delta\Delta}$ and S$\underline{\nabla\nabla}$ constitute a group of data referred to as a command data group.

Next, the operator places the system in the teach mode and writes a robot command program, created using the macro codes, into the teaching memory TPM. With the benefit of the invention, it is now unnecessary to teach the service codes, or command data group, S$\underline{OO}$, S$\underline{\Delta\Delta}$ and S$\underline{\nabla\nabla}$ separately in order to teach, say, the workpiece gripping operation. The operator need only teach the macro code S$\underline{XX}$ for the gripping operation. The same is true for the other robot activities.

When the operator finishes the teaching of the robot, he places the system in the playback mode. When a robot service request signal RSR is generated by the machine tool (not shown) in this mode of operation, the robot controller RBC responds by reading the robot command data constituting the robot command program out of the teaching memory TPM and then by executing the processing specified by the program in order to permit the robot RBT to service the machine tool in the prescribed manner. For example, if an item of data read out of the memory TPM is point data, then a signal indicative of this item of data is delivered to the servo control unit SVC. If the item of data is a robot service code, either a signal is delivered to the robot via the input/output circuit DIO or a signal is read in from one of the robot sensors or limit switches via the input/output circuit DIO. When a macro code is read in from the memory TPM, the particular macro code is identified by the processing unit PU which then reads the plurality of robot service codes, namely the command data group, corresponding to the identified macro code out of the corresondence table MCT and sets them in the working memory WKM. For example, if we assume that the macro code read out of memory TPM is the macro code S$\underline{XX}$ for gripping a workpiece, then the processing unit goes to the correspondence table MCT to read out the group of command data:

S$\underline{OO}$, S$\underline{\Delta\Delta}$, S$\underline{\nabla\nabla}$

and sets this group of data in the working memory WKM. The processing unit PU subsequently reads the robot service code S$\underline{OO}$ for signal generation out of the working memory WKM, executes processing in accordance with this code, then reads out the codes S$\underline{\Delta\Delta}$, S$\underline{\nabla\nabla}$ successively and executes the processing prescribed thereby. Thus, the processing unit PU executes processing just as if robot command data including the codes $S_{OO}$, $S_{\triangle\triangle}$, $S_{\nabla\nabla}$ were read out of the teaching memory TPM, though these codes are actually located in the correspondence table MCT. When the execution of all process steps for the macro code is completed, the processing unit again reads robot command data out of the teaching memory TPM and executes the processing prescribed thereby.

In accordance with the present invention as / it is specifically described and illustrated hereinabove, plural items of robot command data are represented by a single macro code. It is therefore unnecessary to set robot service codes for each of a plurality of processes to be performed at a given point. Instead, the operator need only set a single macro code for these processes. This simplifies the teaching operation greatly and shortens the time required therefor.

Service point data can be put into macro form as well as the robot service codes. It also goes without saying that process steps can be executed individually as in the prior art, and that robot service codes can still be taught one at a time as in the conventional manner.

As many apparently widely different embodiments of the present invention can be made without departing from the spirit and scope thereof, it is to be understood that the invention is not limited to the specific embodiments thereof except as defined in the appended claims.

In general terms, there have been disclosed a robot control method, and a robot control arrangement which utilises the method, wherein a combination of plural robot service codes constituting a command data group is represented by a single code, referred to as a macro code. When the robot is to perform the same series of activities, the operator, in teaching the robot, need enter only the macro code in order to teach each activity in said series. Then, when the macro code is read out of a memory during actual operation, the code is converted into the group of command data and the robot executes the activities corresponding thereto.

CLAIMS

1.    A robot control method in which a robot is made to operate on the basis of robot command data prepared in advance, comprising the steps of:

creating robot command data by collecting into a command data group, represented by a single macro code, several items of command data selected from a multiplicity of various items of command data for activating a robot, and

storing a corresponding relationship between said macro code and said command data group in a memory of the robot,

wherein when said macro code is read from among said robot command data during operation of the robot, the command data group corresponding to said macro code is read out of said memory and said robot performs activities successively on the basis of the items of command data contained in said command data group.

2.    The robot control method according to claim 1, in which the command data group comprises command data indicative of activities to be performed by the robot.

3.    The robot control method according to claim 1, in which the command data group comprises any combination of command data indicative of activities to be performed by the robot and command data for controlling peripheral equipment.

4.    The robot control method according to any / preceding claim, in which the command data group comprises service point data on an operating path of the robot.

5. The robot control method according to any preceding/ claim, in which the corresponding relationship between the macro code and the command data group corresponding to said macro code is capable of being set and changed freely in accordance with the activities to be performed by the robot.

6. A robot control arrangement by means of which a robot can be made to operate on the basis of robot command data prepared in advance, the robot control arrangement being adapted and arranged to perform, when in use, a robot control method comprising the steps of:

creating robot command data by collecting into a command data group, represented by a single macro code, several items of command data selected from a multiplicity of various items of command data for activating a robot, and

storing a corresponding relationship between said macro code and said command data group in a memory of the robot,

wherein when said macro code is read from among said robot command data during operation of the robot, the command data group corresponding to said macro code is read out of said memory and said robot performs activities successively on the basis of the items of command data contained in said command data group.

7. The robot control arrangement according to claim 6, wherein in said robot control method the command data group comprises command data indicative of activities to be performed by the robot.

8. The robot control arrangement according to claim 6, wherein in said robot control method the command data group comprises any combination of command data indicative of activities to be performed by the robot and command data for controlling peripheral equipment.

9. The robot control arrangement according to any one of preceding claims 6 to 8, wherein in said robot control method the command data group comprises service point data on an operating path for the robot.

10. The robot control arrangement according to any one of preceding claims 6 to 9, wherein in said robot control method the corresponding relationship between the macro code and the command data group corresponding to said macro code is capable of being set and changed freely in accordance with the activities to be performed by the robot.

# Fig. I

SDL

NDL

+ZJB
-ZJB
+RJB
-RJB
+QJB
-QJB

NKY

PRB

SRB

TB

T    RP

D   A   S
        5       100

50

MS

KS

OS

# Fig. 2

0083502

# EUROPEAN SEARCH REPORT

0083502

Application number

EP 82 30 6959

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | (WERKSTATTSTECHNIK, vol. 68, no. 6, JUNE 1978, page 325-328, BERLIN (DE); T.WALKER; "programmieren an einer CNC mit Handeingabe" *Entirely* | 1,2 | G 05 B 19/405 |
| Y | PROCEEDING OF THE 4th INTERNATIONAL SYMPOSIUMON INDUSTRIAL ROBOTS, 19-21 November 1974, page 301-310, Tokyo (JP); K.Hasegaw et al.: "Programming and teaching method for indus-trial robot"*Page 302, line 22 - page 307, line 14* | 1-10 | |
| A | GB-A-2 021 287 (FUJITSU FANUC) *Abstract* | 1 | |
| A | US-A-3 725 652 (J.KONVALINA, HOUDAILLE INDUSTRIES) *Abstract* | 1 | **TECHNICAL FIELDS SEARCHED (Int. Cl. ³)** G 05 B |
| P,Y | WO-A-8 204 137 (FANUC) *Abstract* | 1 | |

The present search report has been drawn up for all claims

| Place of search | Date of completion of the search | Examiner |
|---|---|---|
| THE HAGUE | 15-04-1983 | CORNILLIE O.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82